# EUROPÄISCHE PATENTANMELDUNG

(11) **EP 0 876 931 A2**
(43) Veröffentlichungstag der Anmeldung: **11.11.1998**
(21) Anmeldenummer: 98201428.4
(22) Anmeldetag: 04.05.1998
(51) Int. Cl.: B60J 11/00

(54) **Vorrichtung zum Schutz von Kraftfahrzeugen vor Wettereinflüssen und/oder Sonnenstrahlen**

(30) Priorität: 07.05.1997 IT BZ970022; 26.09.1997 IT BZ970052
(71) Anmelder: Elsler, Helene, 39054 Collalbo/Renon, (BZ) (IT)
(72) Erfinder: Elsler, Alois, 39100 Bolzano (IT); Elsler, Helene, 39054 CollaLbo/Renon (BZ) (IT)
(74) Vertreter: Faraggiana, Vittorio, Dr. Ing.

(57) **Zusammenfassung**

Beschrieben wird eine Vorrichtung zum Schutz von Kraftfahrzeugen vor Wettereinflüssen und/oder Sonnenstrahlen, umfassend mindestens eine Abdeckung (2).

Erfindungsgemäß besteht sie in einem ersten Ausführungsbeispiel aus mindestens einer die Abdeckung (2) bildende Schutzstoffbahn (3), aus mindestens einer mindestens eine Stoffbahn (3) aufwickelnde Aufwickelvorrichtung (5), aus einem ersten Spannmittel (13, 14) an einem Ende der Abdeckung (2) zur Befestigung der Plane am Heck des Fahrzeuges und aus einem zweiten Spannmittel (10) zur Befestigung der Abdeckung an der Frontseite des Kraftfahrzeuges.

## Beschreibung

Die vorliegende Erfindung bezieht sich auch eine Vorrichtung zum Schutz von Kraftfahrzeugen vor Wettereinflüssen und/oder Sonnenstrahlen, gemäß dem Oberbegriff des Anspruchs 1.

Es ist das Problem bekannt, dem die im Freien geparkten Kraftfahrzeuge unter Sonnenstrahleneinwirkung bzw. Wettereinflüssen ausgesetzt sind.

Im ersten Fall wird oftmals das Wageninnere bis für die Fahrgäste und vor allem für den Fahrer unerträgliche Temperaturen erwärmt.

Im zweiten Fall hingegen ist bei Gefriertemperaturen vor allem mühsam, die Fensterscheiben von Eisschichten zu befreien, um die Sichtbarkeit durch die Fensterscheiben selbst zu gewährleisten.

Um dieses Problem zu lösen, wurden bis jetzt Planen bzw. zweckmäßig profilierte Abdeckungen vorgeschlagen, um die gesamte Karosserie des Fahrzeuges, die Fensterscheiben inbegriffen, abzudecken. Außer der Unmöglichkeit, eine Plane zur Verfügung zu haben, die gleichzeitig an verschiedene Fahrzeugarten anpaßbar ist, läßt sich die Plane nur mit Schwierigkeit auf der Karosserie ausbreiten und vor der Abfahrt kann sie nur mit Mühe abgenommen werden und läßt sich außerdem nur nach mehrmaligem Umfalten auf annehmbare Außenmaße herabsetzen, um sie im Kofferraum verstauen zu können. Die Haftung zwischen Plane und Karosserie beträgt überdies die Gefahr der Bildung von Kondenswasser an der Karosserie selbst, wobei so der Lack angegriffen werden könnte.

Die Aufgabe der Erfindung liegt daher darin, die von den Planen herkömmlicher Art für den Schutz von Kraftfahrzeugen vor Außeneinflüssen aufgewiesenen Mängel zu beseitigen, indem eine Schutzvorrichtung vorgeschlagen wird, die leicht anbringbar ist, sich rasch an verschiedene Fahrzeugkarosserieformen anpassen läßt, rasch abnehmbar und mit Leichtigkeit auf Mindestmaße zur Unterbringung im Kofferraum verkleinern läßt.

Diese und weitere Aufgaben werden bei einer Vorrichtung durch die Merkmale im kennzeichnenden Teil des Anspruchs 1 gelöst.

Dadurch, daß ein Bandvorrat an einer Bandrolle zur Verfügung steht, ist es möglich, eine in der Länge einstellbare Plane zur Verfügung zu stellen, sodaß sie als Schutz für die unterschiedlichsten Fahrzeugarten Verwendung finden kann. Die Anordnung der Planenenden z.B. an der vorderen Stoßstange und am Schloßbolzen des Kofferraumdeckels zu deren Befestigung am Fahrzeug, läßt die Vorrichtung selbst bequem befestigen.

In einer bevorzugten Ausführungsform erstreckt sich die Plane durch einen Bügel, der die Plane gegenüber der Karosserie, z.B. gegenüber dem Dach derselben auf Abstand hält.

In einer weiteren Ausbildung umfaßt jeder Bügel quer einstellbare Auflageböckchen.

In einer weiteren, bevorzugten Ausführungsform wird die Plane aus zwei Bahnen gebildet, von denen mindestens eine auf der Aufwickelvorrichtung aufwickelbar ist.

Um die Plane wahlweise zu vervollständigen, kann diese an bestimmten Stellen mit Löchern, beispielsweise Langlöchern versehen werden, um seitliche Tuchstreifen anzuhängen, die ihrerseits mit Einhakmitteln für den Eingriff in den Löchern versehen sind, um die Türen und Fenster des Kraftfahrzeuges abzudecken.

Durch Vorsehung einer Vielzahl von aneinandergebundenen Leisten ist es möglich, die dachartige Vorrichtung rasch zu öffnen, um sie auf der Karosserie eines Fahrzeuges auszubreiten. Jede an und für sich starre Leiste ist zweckmäßiger Weise an einer benachbarten Leiste über eine bewegliche Verbindung befestigt, die in einer ersten Ausführungsform wirksam gemacht werden kann, indem zwei Leisten miteinander in Ausrichtung gebracht werden, ausgehend von einer gegenseitigen Überlappung derselben.

In einer weiteren Ausführungsform ist jede Leiste an der anderen im Bereich eines ihrer Ränder angelenkt, wobei in bevorzugter Weise im Bereich einer jeden Anlenkung ein Fußteil vorgesehen ist, der auf der Karosserie des Fahrzeuges in Auflage gebracht werden kann, wobei Abstandsstücke der so gebildeten dachartigen Vorrichtung gegenüber der Karosserie des Fahrzeugs selbst gebildet werden.

In einer weiteren Ausführungsform ist jede Leiste ziehharmonikaartig an der anderen angelenkt.

Weitere Merkmale und Einzelheiten gehen aus den abhängigen Ansprüchen und aus der folgenden Beschreibung einer bevorzugten, in den Figuren der beigefügten Zeichnung dargestellten Ausführungsform hervor. Es Zeigen,
- Figur 1: eine Draufsicht einer erfindungsgemäßen, planartigen Vorrichtung,
- Figur 2: einen erfindungsgemäßen Bügel in einer teilweise, schaubildlichen Schrägansicht,
- Figur 3: eine erfindungsgemäße Aufwickelvorrichtung in einer teilweisen schaubildlichen Schrägansicht aus einer Richtung, und
- Figur 4: dieselbe Aufwickelvorrichtung in einer teilweisen, schaubildlichen Schrägansicht aus einer anderen Blickrichtung,
- Figur 5: ein Schaubild in Explosionsansicht der erfindungsgemäßen Vorrichtung in einer weiteren Ausführungsform,
- Figur 6: die Vorrichtung aus Figur 5 in einer Montagestellung zwischen Kofferraumdeckel und Kofferraum,

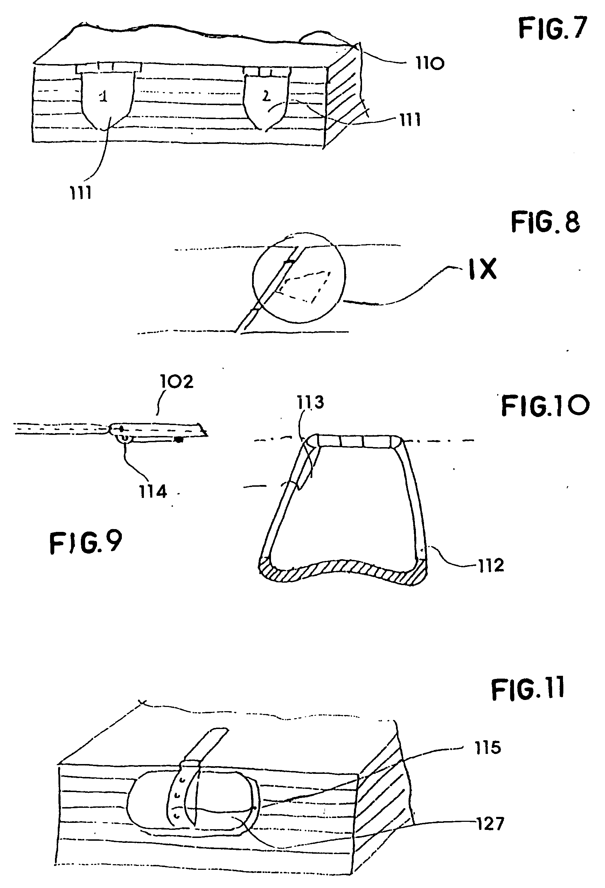

- Figur 7: teilweise die Vorrichtung aus Figur 5 mit rutschsicherer Lasche,
- Figur 8: schematisch einen Auflagefuß der Vorrichtung aus Figur 5,
- Figur 9: die Einzelheit V aus Figur 8,
- Figur 10: den vergrößerten Fuß aus Figur 9,
- Figur 11: eine saugnapfartige Befestigung,
- Figur 12: schematisch die gegenseitige Verbindung zwischen zwei Leisten der Vorrichtung aus Figur 5,
- Figur 13: den Schnitt IX-IX aus Figur 12,
- Figur 14: in einer schematischen Teilansicht die Anlenkung zwischen zwei Leisten,
- Figur 15: verschiedene, mögliche Profile der Leisten,
- Figur 16: schematisch die dachartige Vorrichtung gemaß der Erfindung in einer weiteren Ausführungsform in montierter Stellung, jedoch nicht ausgebreitet, und
- Figur 17: die Vorrichtung aus Figur 16 in ausgebreiteter Stellung auf der Karosserie eines Fahrzeuges.

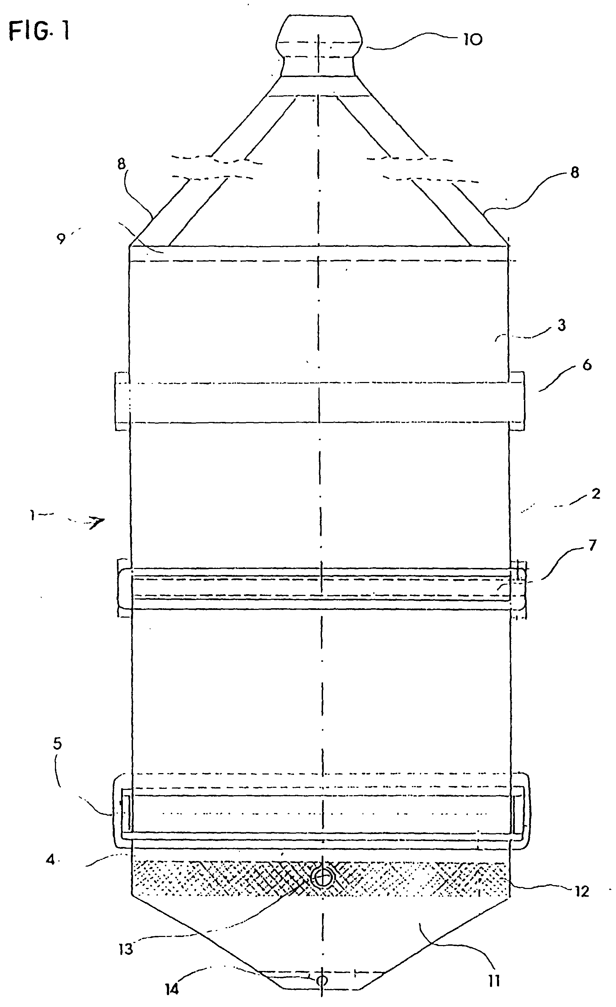

In Figur 1 ist mit der Bezugsziffer 1 insgesamt die erfindungsgemäße, planartige Vorrichtung für Kraftfahrzeuge angegeben. Sie umfaßt eine Plane 2, die derart angeordnet werden kann, daß sie die obere Fläche des Kraftfahrzeuges abdeckt.

Die Plane 2 besteht aus zwei Stoffbahnen 3 und 4. Die Stoffbahn 3 ist auf einer Aufwickelvorrichtung 5 aufwickelbar. Die Stoffbahn 3 durchläuft überdies die Bügel 6 und 7, die auf dem Fahrzeugdach aufliegen.

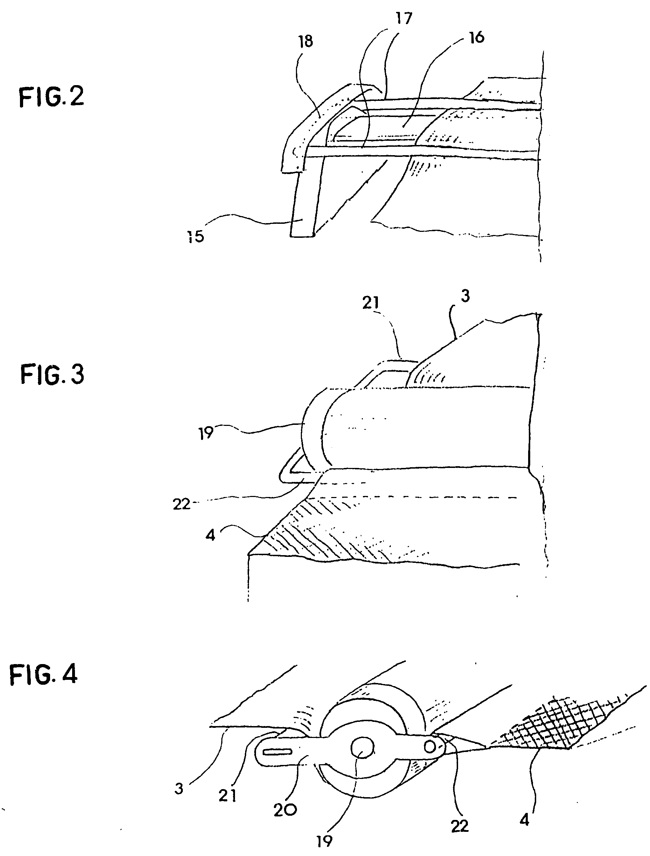

Das freie Ende der Stoffbahn 3 ist über eine Verstärkungstraverse 9 und Riemen 8 durch ein vorderes Einhakmittel 10 an einem nicht gezeigten Kraftfahrzeug bekannter Art verbunden. Das freie Ende der Stoffbahn 4 geht in eine sich verjüngende Lasche 11 über, die mit einer Querverstärkung 12 mit einem Eingriffsloch 13 und einem Eingriffsloch 14 versehen ist, die z.B. an einer, nicht gezeigten Befestigungsstelle im Kofferraum einhakbar ist. Die Querverstärkung 12 ist dazu bestimmt, zwischen dem Kofferraumdeckel und dem Öffnungsrand des Kofferraums eingeklemmt zu werden. Jeder Bügel 6, 7 umfaßt zwei Böckchen 15, von denen in Figur 2 nur eines gezeigt ist, die auf bekannte Art und Weise zueinander parallel außerhalb der Stoffbahn 3 auf dem Fahrzeugdach oder an den Fenstern desselben abstützbar oder befestigbar sind. Die Böckchen 15 tragen eine Gleitschiene 16, der jeweils eine Strebe 17 zugeordnet ist. Die Streben 17 bilden jeweils mit der Gleitschiene 16 einen Schlitz. Durch die Schlitze hindurch läuft das Stoffband 3 derart, daß die Strebenstützen für die Stoffbahnen als Niederdrücker wirken. Die Streben 17 und die Gleitschiene 16 sind mit einem Strebenhalter 18 fest verbunden.

Der Strebenhalter 18 ist seinerseits gleitbar und daher einstellbar durch das Böckchen 15 gelagert. Jede Gleitschiene 16 befindet sich zweckmäßigerweise mit Abstand gegenüber der Oberfläche des Daches oder jeweils der Fahrzeugscheiben.

Wie in Figur 3 und 4 dargestellt, ist die Aufwickelvorrichtung 5 mit einer Rollenträgerwelle 19 versehen, die ihrerseits eine Lasche 20 trägt. Die Laschen 20 befinden sich am Ende der Rollenträgerwelle 19, die jeweils von der Welle 19 beabstandet eine Gleitstange 21 für die Stoffbahn 3, um die Stoffbahn 3 bei der Aufwicklung um die Welle 19 zu führen und eine Befestigungsstrebe 22 des Endes der Stoffbahn 4 trägt.

Eine Vielzahl von Varianten und Abänderungen ist möglich, ohne den Schutzbereich der vorliegenden Erfindung zu verlassen:

So könnte die Plane durch eine einzige auf einer Aufwickelvorrichtung aufwickelbare Stoffbahn gebildet sein, die dann beispielsweise über Zugmittel an einem der Ende des Fahrzeugs befestigt ist. Die Aufwickelvorrichtung könnte mit einem Bügel versehen sein, der die Aufgabe besitzt, die Plane von der Karosserie beabstandet zu halten.

Außer den oben genannten Vorteilen ist hervorzuheben, daß die erfindungsgemaße Vorrichtung am Fahrzeug angebracht werden kann, ohne die Konstruktion desselben zu ändern bzw. abzuändern.

Insbesondere könnte, anstatt die Böckchen vorzusehen, der Bügel auf eine andere, bekannte Art und Weise je nach Anordnung des Fahrzeugdaches befestigt werden.

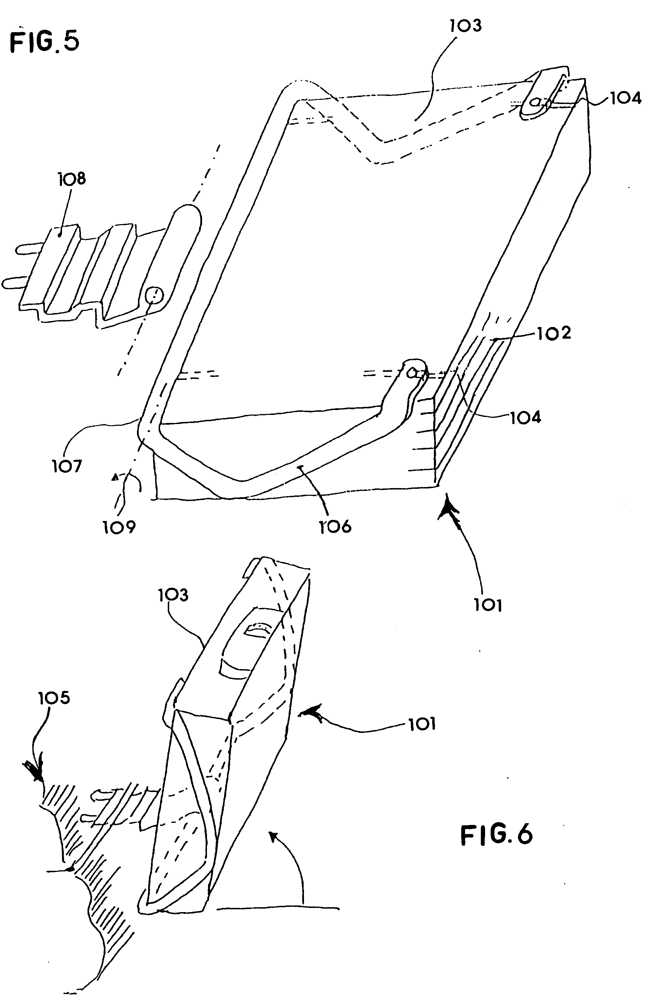

In Figur 5 und 6 ist mit der Bezugsziffer 101 insgesamt eine erfindungsgemäße, dachartige Vorrichtung angegeben. Sie umfaßt eine Vielzahl von Leisten 102, bevorzugter Weise aus Kunststoff. Die unter Leiste 103 ist in der Montagestellung mit zwei zueinander parallelen in Längsrichtung eines Fahrzeuges 105 ausgerichteten Schienen versehen, an die die Enden von umgebogenen Armen 106 längs der Höhe der Leisten 102 eines Bügels 107 fest angebracht sind, dessen die beiden Arme 106 verbindende Seite an einem Anschlußelement 108 angelenkt ist, das zwischen dem Kofferraumdeckel und dem Kofferraum des Fahrzeuges 105 zu begestigen ist. So kann die Vorrichtung um das Anschlußelement 108 in Richtung des Pfeils 109 verschwenkt werden. Die obere Leiste 110 ist in Montagestellung im Bereich seines dem Rand seitens des Bügels 107 abgewandten Rand mit zwei Rippen 11 versehen, die längs der Höhe des Leistenstapels 102 derart elastisch belastet sind, daß jeweils die unterste Leiste einfacher befreit werden kann, um auf ihr die obere zum Gleiten zu bringen.

Im Bereich eines der Ränder einer jeden Leiste, ist in der Mitte derselben ein Fuß 112 vorgesehen, der durch eine Feder 113 in Richtung der Oberfläche der Leiste 102 um die Drehachse 114 herum elastisch belastet ist. So kann jeder Fuß auf der Karosserie in Anlage gebracht werden, um die entsprechende Leiste 102 von der Karosserie selbst auf Abstand zu bringen.

Die oberste Leiste ist überdies mit einem Saugnapf 127 versehen, dessen Abstand von seiner Befestigungsleiste beispielsweise durch ein Riemchen 115 einstellbar ist.

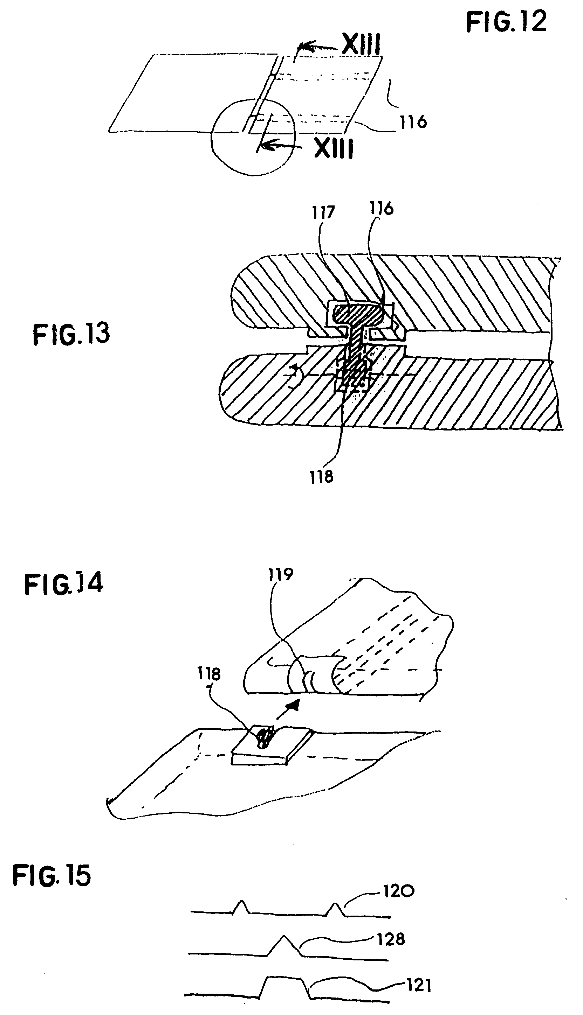

Wie in Figur 12 gezeigt, weist jede Leiste auf einer Seite zwei hinterschnittene, zueinander parallele Schienen 116 auf, die sich in Längsrichtung der Karosserie erstrecken, in denen jeweils auf gleitbare Weise der pilzförmige Kopf 117 eines Bolzens 118 eingreift, der mit seinem anderen Ende an der benachbarten Leiste im Bereich derer Ränder verschwenkbar befestigt ist. Jede Schiene 16 endet im Bereich des Bolzens 118 in Ausrichtung der beiden benachbarten Leisten derart mit einem gekrümmten Profil 119, das die obere Leiste 102 gegenüber der untern Leiste 102 aus Figur 13 in die Position aus Figur 14 verschwenkt werden kann, in der die beiden Leisten zueinander anliegend sind.

Damit einzelne Leisten bequem von Hand aus ergriffen werden können, können sie eine profilierte Oberfläche mit dreiecksförmigen 120, 128 oder trapezförmigen 121 Sicken aufweisen.

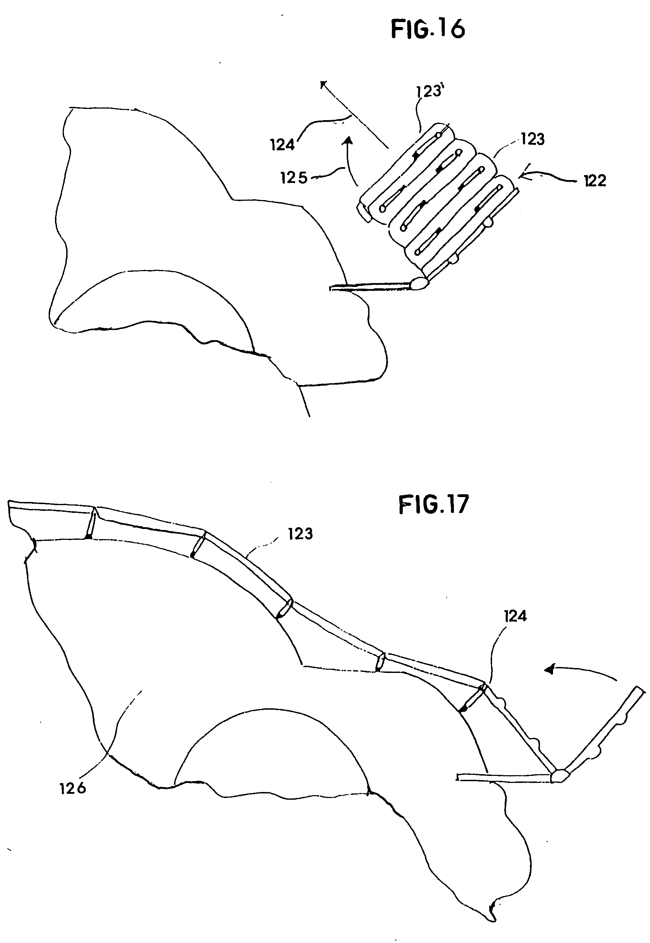

In Figur 16 und 17 hingegen ist eine insgesamt mit der Bezugsziffer 122 angegebene dachartige Vorrichtung gezeigt, in der einzelne Leisten 123 scharnierartig 124 an den anliegenden Leisten angelenkt sind. Wird so die obere Leiste 123' in Richtung 124 gezogen und entsprechend in Drehrichtung 125 verschwenkt, werden die Leisten geöffnet, um auf der Karosserie eines Fahrzeuges 126 ausgebreitet zu werden. Die Befestigungsmittel dieser Lösung sind ähnlich jenen, wie schon unter Bezugnahme auf Figur 5 und 6 beschrieben.

## Patentansprüche

1. Vorrichtung zum Schutz von Kraftfahrzeugen vor Wettereinflüssen und/oder Sonnenstrahlen, dadurch gekennzeichnet, daß ein Schutzmittel, ein erstes Arretiermittel an einem Ende des Schutzmittels zur Befestigung desselben an einer ersten Stelle der Karosserie eines Kraftfahrzeuges und ein zweites Arretiermittel zur Befestigung desselben an einer Stelle des Kraftfahrzeuges umfaßt, die von der ersten Stelle beabstandet ist.

2. Vorrichtung nach Anspruch 1, dadurch gekennzeichnet, daß sie mindestens eine Plane (2) umfaßt, die aus mindestens einer die Plane (2) bildende Schutzstoffbahn (3), aus mindestens einer mindestens eine Stoffbahn (3) aufwickelnde Aufwickelvorrichtung (5), aus einem ersten Spannmittel (13, 14) an einem Ende der Plane (2) zur Befestigung der Plane am Heck des Fahrzeuges und aus einem zweiten Spannmittel (10) zur Befestigung der Plane an der Frontseite des Kraftfahrzeuges besteht.

3. Vorrichtung nach Anspruch 1 und 2, dadurch gekennzeichnet, daß das hintere Spannmittel (13, 14) am Schloßbolzen des Kofferraumdeckels befestigt wird.

4. Vorrichtung nach Anspruch 1 und 2, dadurch gekennzeichnet, daß das vordere Spannmittel ein Einhakmittel (10) ist, das dazu geignet ist, am vorderen Stoßfänger eines Kraftfahrzeuges anzugreifen.

5. Vorrichtung nach Anspruch 1 und 2, dadurch gekennzeichnet, daß die mindestens eine Stoffbahn mindestens einen Bügel (6; 7) durchläuft, der von der Karosserie des Fahrzeuges beabstandet ist.

6. Vorrichtung nach Anspruch 5, dadurch gekennzeichnet, daß der Bügel (6; 7) aus zwei Böckchen (15) gebildet wird, die an den Seiten der Plane angeordnet sind.

7. Vorrichtung nach Anspruch 6, dadurch gekennzeichnet, daß der Abstand zwischen den Böckchen (15) einstellbar ist.

8. Vorrichtung nach den vorstehenden Ansprüchen, dadurch gekennzeichnet, daß die Plane aus zwei Stoffbahnen (3, 4) besteht.

9. Vorrichtung nach den vorstehenden Ansprüchen, dadurch gekennzeichnet, daß die Plane mit Löchern versehen ist, die an den Seiten der Plane angeordnet sind, um seitliche Stoffstreifen anzuhängen, die die Seitenteile des Kraftfahrzeuges abdecken.

10. Vorrichtung nach den vorstehenden Ansprüchen, dadurch gekennzeichnet, daß mindestens zwei zueienander parallel anliegende Planen vorgesehen sind.

11. Vorrichtung nach Anspruch 1, dadurch gekennzeichnet, daß das Schutzmittel durch eine Vielzahl von zueinander angesetzten Leisten (102, 123) gebildet ist, von denen, in gestapelter Position der Leisten, eine der äußeren mit dem ersten Arretiermittel (108) und die andere äußere mit dem zweiten Arretiermittel (114) verbunden ist.

12. Vorrichtung nach Anspruch 1 und 11, dadurch gekennzeichnet, daß ein erstes Arretiermittel durch ein erstes Anschlußmittel (108) zwischen Kofferraumdeckel und Kofferraum eines Kraftfahrzeuges (105) gebildet ist, an dem ein Bügel (107) angelenkt ist, der an an der unteren Leiste des Leistenstapels (102) festliegenden Schienen (104) befestigt ist.

13. Vorrichtung nach Anspruch 1 und 11 bis 12, dadurch gekennzeichnet, daß das zweite Arretiermittel aus einem Saugnapf (114) besteht.

14. Vorrichtung nach Anspruch 11 bis 13, dadurch gekennzeichnet, daß jede Leiste mindestens eine hinterschnittene Schiene (116) aufweist, die sich in Längsrichtung des Kraftfahrzeuges erstreckt, in der der pilzartige Kopf (117) eines Bolzens (118) eingreift, der im Bereich eines Randes einer der anderen Leiste gegenüberliegenden Leiste verschwenkbar befestigt ist, wobei die Schiene einen gekrümmten Abschnitt (119) mit gekrümmter Führung aufweist, die die Verschwenkung einer Leiste gegenüber der anderen erlaubt.

15. Vorrichtung nach Anspruch 11 bis 13, dadurch gekennzeichnet, daß jede Leiste an der anderen über ein festes Scharnier (124) angelenkt ist.

16. Vorrichtung nach den Ansprüchen 11 bis 15, dadurch gekennzeichnet, daß jede Leiste mit rückklappbaren Füßen versehen ist, die auf der Karosserie des Kraftfahrzeuges aufliegen.
